(19) **Europäisches Patentamt European Patent Office Office européen des brevets**

(11) **EP 1 305 903 B1**

(12) **EUROPEAN PATENT SPECIFICATION**

(45) Date of publication and mention
of the grant of the patent:
**02.05.2007 Bulletin 2007/18**

(51) Int Cl.:
**H04J 14/02** (2006.01)

(21) Application number: **01984464.6**

(22) Date of filing: **26.07.2001**

(86) International application number:
**PCT/GB2001/003399**

(87) International publication number:
**WO 2002/011336 (07.02.2002 Gazette 2002/06)**

(54) **WAVELENGTH DIVISION MULTIPLEX (WDM) OPTICAL NETWORK**

OPTISCHES WELLENLÄNGENMULTIPLEXNETZWERK

RESEAU OPTIQUE A MULTIPLEXAGE PAR REPARTITION EN LONGUEUR D'ONDE (MRL)

(84) Designated Contracting States:
**AT BE CH CY DE DK ES FI FR GB GR IE IT LI LU MC NL PT SE TR**

(30) Priority: **29.07.2000 GB 0018604**
**13.09.2000 GB 0022605**

(43) Date of publication of application:
**02.05.2003 Bulletin 2003/18**

(73) Proprietor: **Ericsson AB**
**Stockholm (SE)**

(72) Inventors:
• **CUSH, Rosemary**
**Northampton NN3 3LL (GB)**
• **WOOD, Nigel**
**Brackley,**
**Northants NN13 5SB (GB)**

(74) Representative: **Collier, Ian Terry et al**
**Ericsson Limited**
**Intellectual Property Group**
**Maplewood**
**Chineham Business Park**
**Basingstoke**
**Hampshire, RG24 8YB (GB)**

(56) References cited:
**US-A- 5 963 348**    **US-A- 5 999 288**

• **ELREFAIE A F: "MULTIWAVELENGTH SURVIVABLE RING NETWORK ARCHITECTURES" PROCEEDINGS OF THE INTERNATIONAL CONFERENCE ON COMMUNICATIONS (ICC). GENEVA, MAY 23 - 26, 1993, NEW YORK, IEEE, US, vol. 2, 23 May 1993 (1993-05-23), pages 1245-1251, XP000371271 ISBN: 0-7803-0950-2**

EP 1 305 903 B1

Printed by Jouve, 75001 PARIS (FR)

**Description**

This invention relates to a wavelength division multiplex (WDM) optical network and more especially, although not exclusively, to a passive ring configuration WDM network and to an add and drop optical filter for use within such a network.

As is known a WDM optical network comprises a plurality of nodes that are interconnected by optical waveguiding means, typically optical fibres. At each node one or more selected wavelength channels can be added or dropped to provide routing of WDM optical signals between nodes based on the wavelength channel. Typically a single unique wavelength channel is ascribed to a given connection between two nodes though it is known to use more than one wavelength channel for the same connection to increase transmission capacity.

One network topography, often termed a ring configuration, is one in which the nodes are connected by the optical fibres in a point-to-point serial manner in an unbroken loop or ring configuration. At each node one or more add or drop optical filters are connected in series within the ring and each adds or drops a single selected wavelength channel of the WDM signal. An add filter allows the given wavelength channel to be introduced (added) at the node to the ring whilst allowing the remainder of the wavelength channels to pass substantially unattenuated, whilst a drop filter allows the given wavelength channel to be removed (dropped) at the node from the ring whilst allowing the remainder of the wavelength channels to pass substantially unattenuated.

For each duplex connection to the ring there is provided at the node an add-drop filter module which comprises respective add and drop optical filters.

WDM network configurations can comprise a full mesh in which every node, in terms of wavelength connection, is connectable to every other node or a hub network in which one node, termed a hub, is connected to every other node, that is no single wavelength channel is shared with more than one other node.

Optical ring networks can be divided into those which are passive and do not include optical amplification within the ring or at the nodes and those which are non-passive and include optical amplifying means (typically Erbium doped fibre amplifiers EDFAs or Raman optical amplifiers) within the configuration to amplify the optical signals to compensate for loss within the network. The former which are typically a few tens of kilometres around the ring are often used as part of local area networks, and are termed metro (metropolitan) networks.

The inventors have appreciated that a particular limitation of passive metropolitan optical ring networks is that the through (sometimes termed insertion or express) loss of each add-drop filter module places a major constraint on the number of nodes within the network. The through loss of the filter module is the loss experienced by the wavelength channels which pass through and around the ring. Since all of the add-drop filter modules are connected in series within the ring the express loss can quickly consume the link loss budget of the network especially since a single duplex connection between two nodes requires two add-drop filter modules, that is a total of four optical filters. For example the link loss budget for a receiver of sensitivity of -28dBm and a transmitter operating at +5dBm, is 33dBm. For a fully meshed six-node network this requires fifteen wavelength connections (i.e. fifteen WDM channels) each of which requires two add-drop filter modules for duplex communication, i.e. thirty filter modules. Even for a through pass loss of 1dBm per filter module (that is a through loss of O.5dBm per add or drop filter), more typically the best of the known filter modules currently have a loss closer to 1.5dBm, the loss for a full circuit around the ring is 30dBm, leaving little link loss budget for optical fibre losses and resulting in a ring of very limited circumference.

The present invention has arisen in an endeavour to provide a WDM ring configuration which at least in part alleviates the limitations of the known networks,

According to the present invention there is provided a WDM optical network comprising: a plurality of nodes serially connected in a ring configuration by optical waveguiding means; and add and drop optical filters at each node connected in series within the ring, wherein routing of optical signals between node pairs is in dependence upon a respective wavelength channel ascribed to each node pair, characterised in that one or more of said filters are configured to add/drop at least two selected adjacent wavelength channels of the WDM optical signal to/from the ring whilst allowing the remainder of the channels of the WDM signal to pass substantially unattenuated and wherein the respective wavelength channels for each node pair interconnection are ascribed such as to maximise the number of adjacent wavelength channels at each node. Selecting the wavelength channel connections in this way minimises the number of add and drop optical filters required thereby minimising the through loss associated with the filters and enabling a greater number of nodes to be connected for a given link loss budget.

Preferably the passband (or stop band depending on whether the filter operates as a transmission or reflection device) of the filters are selected to be sufficiently broad to enable at least two selected adjacent wavelength channels to be added or dropped. By careful design of such a filter the through loss can be configured to be as low as that of the known filters which are capable of adding/dropping a single wavelength and this enables the number of nodes and/ or the distance between nodes to be increased for a given link loss budget.

Preferably the ring configuration is passive and does not include optical amplifying means for optically amplifying the WDM optical signals passing around the ring. Alternatively the ring can include optical amplifying means for optically amplifying the WDM optical signals passing around the ring.

Preferably the network is fully meshed and each node includes add and drop filters such that every node is connectable to every other node by a respective wavelength channel. In a preferred arrangement a single wavelength channel defines a connection between a respective pair of nodes though to increase transmission capacity more than one wavelength channel can be used to define a connection between a respective pair of nodes. Advantageously each filter adds or drops either a single or two adjacent wavelength channels.

Advantageously the add and drop filters comprise a dielectric filter stack. Alternatively they can comprise a resonant cavity or an optical fibre Bragg grating. Preferably each filter has an insertion loss of 0.5dBm or less. Preferably each filter has a figure of merit of 0.7 or greater.

In order that the invention may be better understood wavelength division multiplex optical network in accordance with the invention will now be described by way of example only with reference to the accompanying drawings in which:

Figure 1 is a schematic representation of an optical ring WDM network in accordance with the invention;

Figure 2 is a schematic representation of an add - drop filter module of Figure 1; and

Figure 3 is a flow diagram illustrating a method of ascribing wavelength channels to the add - drop filter modules at each node of a WDM network in accordance with the invention.

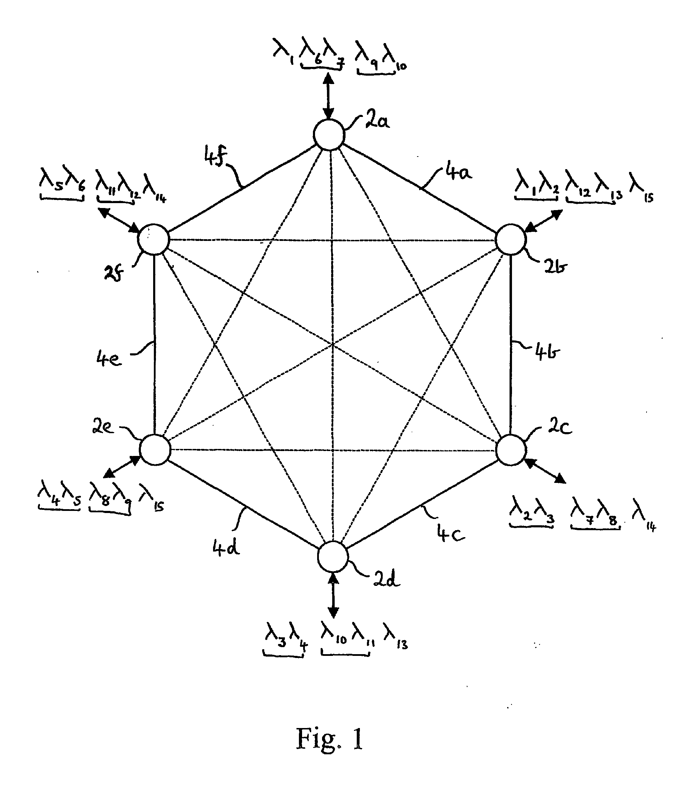

Referring to Figure 1 there is shown a schematic representation of a fully meshed duplex optical fibre wavelength division multiplex (WDM) network in accordance with the invention. The network comprises six nodes 2a - 2f which are connected to each other in a point-to-point serial manner by optical fibres 4a - 4f in an unbroken loop or ring configuration. In the configuration illustrated the typical total path length around the ring, that is the combined lengths of the optical fibres 4a - 4f, is of the order 40 km giving a loss associated with the fibres of the order of 10dBm.

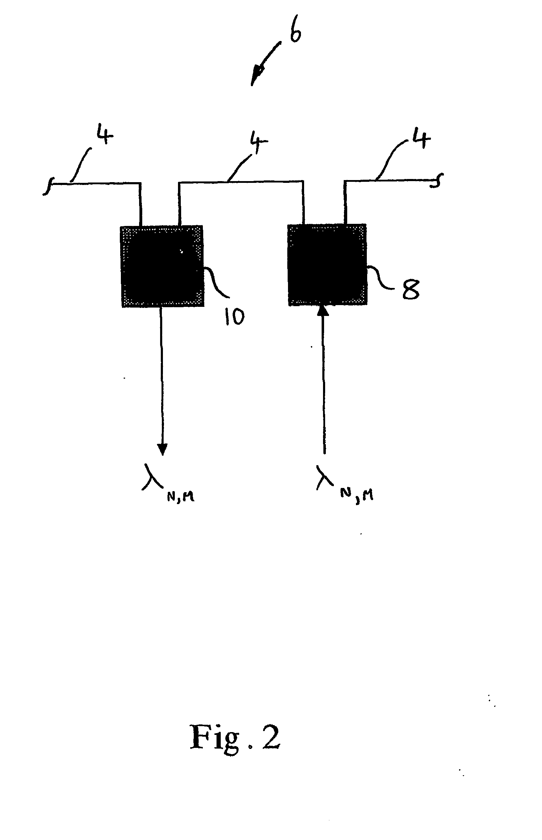

Located at each node and connected serially within the ring there are a number, three for the network illustrated in Figure 1, of add - drop filter modules 6. One such add - drop filter module 6 is shown in Figure 2.

Each add - drop filter module 6 comprises a respective add optical filter 8 and respective drop optical filter 10 each of which is serially connected within the ring. Each add filter 8 is configured such as to allow one or more selected wavelength channels $\lambda_{N,M}$ to be added to the ring but which allows the remainder of the wavelength channels to pass substantially unattenuated on around the ring. Each drop filter 10 is configured such as to allow one or more selected wavelength channels $\lambda_{N,M}$ to be dropped from the ring but which allows the remainder of the wavelength channels to pass substantially unattenuated on through the ring.

Both optical filters 8, 10 comprise a thin film dielectric filter stack, resonant cavity or fibre Bragg grating which has a transmission passband which is selected to enable the one or more selected wavelength channels of the WDM optical signal to pass whilst reflecting other wavelength channels. Typically each filter has a through (insertion or express) loss, that is a loss associated with the wavelength channels it reflects, of approximately 0.5dBm and a transmission loss, that is the loss associated with adding or dropping the or each selected wavelength channel, of 1.5dBm. An important feature of the optical filters 8, 10 is their Figure of Merit (FOM), that is the ratio of the passband wavelength for a transmission of -3dBm to that for a transmission of -25dBm, since this gives a measure of the selectivity of the filter in terms of wavelength channel. The passband of each filter needs to be wide enough to allow the selected wavelength channel or channels to pass substantially unattenuated and also to be sufficiently selective such that it is substantially reflecting to other channels to ensure they pass through substantially unattenuated. For example for wavelength channels which are spaced at 100GHz the FOM would typically need to be 0.7 or greater.

Referring again to Figure 1, it is to be noted that at each node 2a-2f the wavelength channels that are added or dropped by each add and drop filter 8,10 are indicated $\lambda_1$ to $\lambda_{15}$. Thus it will be appreciated that in the configuration illustrated node 2a is connected, in terms of wavelength channel, to node 2b by wavelength channel $\lambda_1$ and is connected to node 2c- 2f by wavelength channels $\lambda_7$, $\lambda_{10}$, $\lambda_9$ and $\lambda_6$ respectively. For the purpose of illustration the wavelength channel connections are illustrated in Figure 1 as dashed lines and it will be appreciated that these do not suggest a physical connection, by means of an optical fibre, between these nodes. It will be appreciated from Figure 1 that the network is fully meshed in that every node 2a- 2f is connectable to every other node by a respective wavelength channel $\lambda_1$ - $\lambda_{15}$.

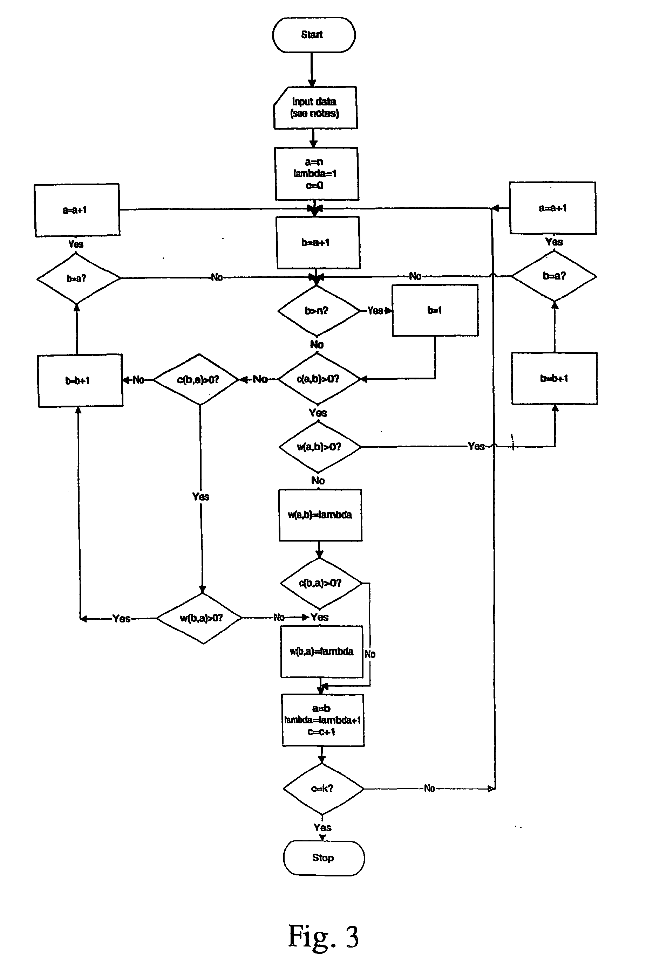

An important feature of the network architecture of the present invention is the way in which the wavelength channel is ascribed to each connection. With reference to Figure 1 it is to be noted that they have been ascribed using the algorithm illustrated in the flow chart of Figure 3 to maximise the number of adjacent wavelength channel connections at each node. For example at node 2a there are adjacent channels $\lambda_{6,7}$ and $\lambda_{9,10}$; at node 2b channels $\lambda_{1,2}$ and $\lambda_{12,13}$; at node 2c channels $\lambda_{2,3}$ and $\lambda_{7,8}$; at node 2d channels $\lambda_{3,4}$ and $\lambda_{10,11}$; at node 2e channels $\lambda_{4,5}$ and $\lambda_{8,9}$ and at node 2f channels $\lambda_{5,6}$ and $\lambda_{11,12}$. For each of these adjacent wavelength channels a single add - drop filter module is provided in which, as described above, each add and drop filter has a passband sufficiently wide to add/drop the adjacent channels.

Thus for the network illustrated in Figure 1 a total of eighteen add - drop filter modules 6 are required: six single wavelength channel filter modules and twelve two channel filter modules. In contrast in the known network architecture, in which each add - drop filter module adds/drops a single wavelength channel, a total of thirty filter modules are required. As described above by careful design of the add and drop optical filters their through loss can be made to be substantially the same as one which is operable to add/drop a single wavelength and therefore a reduction in the number of add and drop filters provides a significant advantage in terms of through (express) loss round the ring. Although it is probable that the filters will have a greater transmission loss for their selected wavelengths this increase in loss is more than outweighed by the decrease in loss for the through (express) path around the ring.

It has been found that for an optimum fully meshed network configuration the add - drop filter modules should each add and drop either a single wavelength channel or two adjacent wavelength channels to minimise the total number of filter modules. Table 1 tabulates the number of such filter modules required for fully meshed duplex network with three to nine nodes. For comparison the table also includes the number of filter modules required for a fully meshed duplex network using filter modules which are capable of adding and dropping only a single wavelength channel. As can be seen from the table the reduction in the total number of filter modules and hence through loss is significant as the number of nodes increases. It will be further appreciated that, for a given link loss budget and given through loss for each filter, a network configuration in accordance with the invention can have at least one more node than the known network architecture. Whilst the network described has been in relation to a passive ring it will be appreciated that a network in accordance with the invention also provides benefits in a network which includes amplifying means for amplifying the WDM optical signals passing around the ring. In such a network the length (circumference around the ring) and/or number of nodes can be increased or the amplification reduced compared with the known networks.

Referring to Figure 3 there is shown a flow diagram for ascribing the wavelength channels to each of the add/drop filters for each node of a WDM network in accordance with the invention. The algorithm which maximises the number of adjacent wavelength channels at each node is suitable for any network configuration and is not limited to the fully meshed ring configuration described above.

Input data n, k and c(x,y) for the algorithm respectively comprises the number of nodes, the total number of duplex interconnections between nodes and an array which specifies the required connections between nodes. The calculated wavelength lambda for each connection is stored in an array w(x,y) and temporary variables a, b and c used during the calculation. The arrays c(x,y) and w(x,y) are n by n matrices in which the row represents the starting node and the columns the finishing node. A zero within the matrix c(x,y) indicates that no connection is required between the respective nodes and a value greater than zero, typically one, indicates that a connection is required. Since it is impossible to have an interconnection for a single node all values for both arrays in which x=y, i.e. the falling diagonal, will be zero. For any fully meshed network having duplex connection between all nodes, all of remaining values of the array will be one. For example for the network of Figure 1 in which n=6, k=15, the arrays c(x,y) and w(x,y) are respectively given by:

$$c(x,y)=\begin{vmatrix} 0 & 1 & 1 & 1 & 1 & 1 \\ 1 & 0 & 1 & 1 & 1 & 1 \\ 1 & 1 & 0 & 1 & 1 & 1 \\ 1 & 1 & 1 & 0 & 1 & 1 \\ 1 & 1 & 1 & 1 & 0 & 1 \\ 1 & 1 & 1 & 1 & 1 & 0 \end{vmatrix} \quad w(x,y)=\begin{vmatrix} 0 & 1 & 7 & 10 & 9 & 6 \\ 1 & 0 & 2 & 13 & 15 & 12 \\ 7 & 2 & 0 & 3 & 8 & 14 \\ 10 & 13 & 3 & 0 & 4 & 11 \\ 9 & 15 & 8 & 4 & 0 & 5 \\ 6 & 12 & 14 & 11 & 5 & 0 \end{vmatrix}$$

From matrix w(x,y) it will be seen that the connection between nodes two and four is given by wavelength channel w(2,4)=w(4,2)=13 whilst the connection between nodes two and six by w(2,6)=w(6,2)= 12 and so forth.

As described the algorithm is intended for ascribing a single wavelength channel, interconnection, between any two nodes. It will be appreciated that it can be readily modified to allow for multiple wavelength connections between any two nodes by specifying additional connection arrays c(x,y) up to the maximum number of wavelength connections between any two nodes. The algorithm then needs to be modified to check these additional connection arrays if a wavelength has already been allocated to the connection. For example if it was required to have two wavelength connections between nodes 2b and 2d of the network of Figure 1 one additional connection array $c_1(x,y)$ would be required in which $c_1(2,4)=c_1(4,2)=1$ and all remaining values are zero.

It will be appreciated that the WDM network of the present invention is not restricted to the specific embodiment described and that variations can be made which are within the scope of the invention. For example it will be appreciated that many add and drop filters are unidirectional in nature and will therefore only allow the WDM signals to pass around the ring in a single direction. With such an arrangement all the wavelength interconnections between nodes are unprotected. For example in the network of Figure 1 the wavelength channel interconnecting nodes 2b and 2d is $\lambda_{13}$. For such a network in which the WDM optical signals can only propagate in a clockwise direction information will be communicated from node 2b to node 2d via optical fibres 4b and 4c whilst from node 2d to 2b it is communicated over fibres 4d, 4e, 4f and 4a. As a result if an break occurs in any fibre one direction of each interconnection will be lost. To provide protected paths a dual ring of optical fibres or bi-directional ring can be used.

Whilst it is found that use at each node of both add - drop filter modules which are capable of adding/dropping a single and adjacent wavelength minimises the total number of filter modules, in an alternative arrangement add - drop filter modules, can additionally be used which add and drop more than two adjacent wavelength channels. In one such arrangement three different types of filter modules can be used which add/drop a single, adjacent pair and three adjacent channels. For a six node network using such filter modules a total of sixteen filter modules are required. Although such an arrangement reduces the total number of filter modules it requires more different types of add and drop filters and the associated increase in cost potentially could outweigh the benefit in terms of loss.

Table 1. Number of add - drop filter modules required for a fully meshed duplex network for the known network arrangement and a network in accordance with the invention.

| No. of nodes | No. of wavelength connections | No. of add-drop filter modules | | reduction in No. of filter modules |
|---|---|---|---|---|
| | | known network using single wavelength channel filters n(n-1) | network according to invention using single wavelength channel filters and two adjacent wavelength channel filters. For n odd = (n(n-1)+2)/2 For n even = $n^2/2$ | |
| 3 | 3 | 6 | 4 | 2 |
| 4 | 6 | 12 | 8 | 4 |
| 5 | 10 | 20 | 11 | 9 |
| 6 | 15 | 30 | 18 | 12 |
| 7 | 21 | 42 | 22 | 20 |
| 8 | 28 | 56 | 32 | 24 |
| 9 | 36 | 72 | 37 | 35 |

**Claims**

1. A WDM optical network comprising: a plurality of nodes (2a-2f) serially connected in a ring configuration by optical waveguiding means (4a-4f); and add and drop optical filters (8, 10) at each node connected in series within the ring, wherein routing of optical signals between node pairs is in dependence upon a respective wavelength channel ascribed to each node pair, **characterised in that** one or more of said filters (8, 10) are configured to add/drop at least two selected adjacent wavelength channels ($\lambda_N$, $\lambda_M$) of the WDM optical signal to/from the ring whilst allowing the remainder of the channels of the WDM signal to pass substantially unattenuated and wherein the respective wavelength channels for each node pair interconnection are ascribed such as to maximise the number of adjacent wavelength channels at each node.

2. A WDM network according to Claim 1 in which the ring is passive and does not include optical amplifying means for optically amplifying the WDM optical signals passing around the ring.

3. A WDM network according to Claim 1 or Claim 2 in which the network is fully meshed and each node (2a-2f) includes add and drop filters (8, 10) such that every node is connectable to every other node by a respective wavelength

channel ($\lambda_1$ - $\lambda_{15}$).

4. A WDM network according to any one of Claims 1 to 3 in which a single wavelength channel defines a connection between a respective pair of nodes.

5. A WDM network according to any preceding claim in which each filter adds or drops either a single or two adjacent wavelength channels.

6. A WDM network according to any preceding claim in which the optical waveguiding means (4a-4f) comprise an optical fibre.

7. A WDM network according to any preceding claim in which the add and drop filters comprise a dielectric filter stack.

8. A WDM network according to any one of Claims 1 to 5 in which the add and drop filters comprise a resonant cavity.

9. A WDM network according to any one of Claims 1 to 5 in which the add and drop filters comprise a fibre Bragg grating.

10. A WDM network according to any preceding claim in which the add and drop filters have an insertion loss of 0.5dB or less.

11. A WDM network according to any preceding claim in which the add and drop filters have a Figure of Merit of 0.7 or greater.

**Patentansprüche**

1. Optisches WDM-Netz, umfassend eine Vielzahl von Knoten (2a-2f), die durch optische Wellenleitungsmittel (4a-4f) in einer Ringkonfiguration hintereinandergeschaltet sind; und optische Add- und Drop-Filter (8, 10) an jedem Knoten, die innerhalb des Rings hintereinandergeschaltet sind, wobei die Leitweglenkung optischer Signale zwischen Knotenpaaren abhängig ist von einem jeweiligen Wellenlängenkanal, der jedem Knotenpaar zugeordnet ist, **dadurch gekennzeichnet, dass** eines oder mehrere der Filter (8, 10) so konfiguriert sind, dass sie mindestens zwei ausgewählte benachbarte Wellenlängenkanäle ($\lambda_N$, $\lambda_M$) des optischen WDM-Signals in den /aus dem Ring einfügen/ herausnehmen, während sie es den verbleibenden Kanälen des WDM-Signals ermöglichen, im Wesentlichen ungedämpft zu passieren, und wobei die jeweiligen Wellenlängenkanäle für jede Knotenpaarverbindung derart zugeordnet sind, dass die Anzahl benachbarter Wellenlängenkanäle an jedem Knoten maximiert wird.

2. WDM-Netz nach Anspruch 1, wobei der Ring passiv ist und keine optischen Verstärkungsmittel zum optischen Verstärken der um den Ring herum passierenden optischen WDM-Signale aufweist.

3. WDM-Netz nach Anspruch 1 oder Anspruch 2, wobei das Netz vollständig vermascht ist und jeder Knoten (2a-2f) Add- und Drop-Filter (8, 10) aufweist, so dass jeder Knoten mit jedem anderen Knoten durch einen jeweiligen Wellenlängenkanal ($\lambda_1$, $\lambda_{15}$) verbindbar ist.

4. WDM-Netz nach einem der Ansprüche 1 bis 3, wobei ein einzelner Wellenlängenkanal eine Verbindung zwischen einem jeweiligen Knotenpaar definiert.

5. WDM-Netz nach einem der vorstehenden Ansprüche, wobei jedes Filter entweder einen einzelnen oder zwei benachbarte Wellenlängenkanäle einfügt oder herausnimmt.

6. WDM-Netz nach einem der vorstehenden Ansprüche, wobei die optischen Wellenleitungsmittel (4a-4f) eine optische Faser umfassen.

7. WDM-Netz nach einem der vorstehenden Ansprüche, wobei die Add- und Drop-Filter einen dielektrischen Filterstapel umfassen.

8. WDM-Netz nach einem der Ansprüche 1 bis 5, wobei die Add- und Drop-Filter einen Hohlraumresonator umfassen.

9. WDM-Netz nach einem der Ansprüche 1 bis 5, wobei die Add- und Drop-Filter ein Bragg-Fasergitter umfassen.

**10.** WDM-Netz nach einem der vorstehenden Ansprüche, wobei die Add- und Drop-Filter eine Einfügungsdämpfung von 0, 5 dB oder weniger aufweisen.

**11.** WDM-Netz nach einem der vorstehenden Ansprüche, wobei die Add- und Drop-Filter einen Gütefaktor von 0,7 oder mehr aufweisen.


**Revendications**

**1.** Réseau optique WDM comprenant : une pluralité de noeuds (2a-2f) reliés en série dans une configuration à anneau à l'aide de moyens à guides d'onde optiques (4a-4f) ; et des filtres optiques d'insertion et d'extraction (8,10) à chaque noeud, reliés en série à l'intérieur de l'anneau, dans lequel le routage des signaux optiques entre les paires de noeuds dépend d'un canal respectif de longueur d'onde attribué à chaque paire de noeuds, **caractérisé en ce qu'**un ou plusieurs desdits filtres (8,10) sont configurés afin d'insérer/d'extraire au moins deux canaux de longueur d'onde adjacents choisis ($\lambda_N$, $\lambda_M$) du signal optique WDM vers/à partir de l'anneau tout en permettant au reste des canaux du signal WDM de passer de façon essentiellement non atténuée, et dans lequel les canaux respectifs de longueur d'onde pour chaque interconnexion de paires de noeuds sont attribués en vue de maximaliser le nombre de canaux de longueur d'onde adjacents au niveau de chaque noeud.

**2.** Réseau WDM selon la revendication 1, dans lequel l'anneau est passif et ne comporte pas de moyens d'amplification optiques pour amplifier optiquement les signaux optiques WDM passant autour de l'anneau.

**3.** Réseau WDM selon la revendication 1 ou la revendication 2, dans lequel le réseau est complètement maillé et chaque noeud (2a-2f) comporte des filtres d'insertion et d'extraction (8,10) de sorte que tout noeud peut être connecté à tout autre noeud au moyen d'un canal respectif de longueur d'onde ($\lambda_1$-$\lambda_{15}$).

**4.** Réseau WDM selon l'une quelconque des revendications 1 à 3, dans lequel un seul canal de longueur d'onde définit une connexion entre une paire respective de noeuds.

**5.** Réseau WDM selon toute revendication précédente, dans lequel chaque filtre insère ou extrait un seul ou deux canaux adjacents de longueur d'onde.

**6.** Réseau WDM selon toute revendication précédente, dans lequel les moyens à guides d'onde optiques (4a-4f) comprennent une fibre optique.

**7.** Réseau WDM selon toute revendication précédente, dans lequel les filtres d'insertion et d'extraction comprennent un empilement de filtres diélectriques.

**8.** Réseau WDM selon l'une quelconque des revendications 1 à 5, dans lequel les filtres d'insertion et d'extraction comprennent une cavité résonante.

**9.** Réseau WDM selon l'une quelconque des revendications 1 à 5, dans lequel les filtres d'insertion et d'extraction comprennent un réseau de Bragg à fibre.

**10.** Réseau WDM selon toute revendication précédente, dans lequel les filtres d'insertion et d'extraction ont une perte d'insertion de 0,5dB ou moins.

**11.** Réseau WDM selon toute revendication précédente, dans lequel les filtres d'insertion et d'extraction ont un facteur de mérite de 0,7 ou plus.

Fig. 1

Fig. 2

Fig. 3